Europäisches Patentamt

European Patent Office

Office européen des brevets

(11) Veröffentlichungsnummer: **0 668 014 A1**

## EUROPÄISCHE PATENTANMELDUNG

(21) Anmeldenummer: **94250040.6**

(22) Anmeldetag: **21.02.94**

(51) Int. Cl.6: **A01N 35/02**, //(A01N35/02, 39:00,31:04,31:02,25:30)

(43) Veröffentlichungstag der Anmeldung:
**23.08.95 Patentblatt 95/34**

(84) Benannte Vertragsstaaten:
**AT BE CH DE DK ES FR GB GR IE IT LI LU NL SE**

(71) Anmelder: **SCHÜLKE & MAYR GMBH**

**D-22840 Norderstedt (DE)**

(72) Erfinder: **Eggensperger, Heinz, Dr.**
**Alsterallee 13**
**D-22397 Hamburg (DE)**
Erfinder: **Löwer, Bernd, Dr.**
**Wellingsbütteler Landstrasse 200**
**D-22337 Hamburg (DE)**
Erfinder: **Mohr, Michael**
**Kisdorfer Weg 20**
**D-24568 Kaltenkirchen (DE)**
Erfinder: **Goroncy-Bermes, Peter, Dr.**
**(Dipl.-Biologe)**
**Rantzaustrasse 17**
**D-22926 Ahrensburg (DE)**
Erfinder: **Kleinwort, Rolf**
**Holmer Strasse 125 A**
**D-22880 Wedel (DE)**
Erfinder: **Beilfuss, Wolfgang, Dr.**
**Timmkoppel 39**
**D-22339 Hamburg (DE)**

(74) Vertreter: **UEXKÜLL & STOLBERG**
**Patentanwälte**
**Beselerstrasse 4**
**D-22607 Hamburg (DE)**

(54) **Wässriges Desinfektionsmittelkonzentrat und Desinfektionsmittel auf Aldehyd- und Alkoholbasis und deren Verwendung.**

(57) Wäßriges Desinfektionsmittelkonzentrat, das Succindialdehyd, Glutardialdehyd und/oder Formaldehyd, ein oder mehrere begrenzt wassermischbare Alkohole und gegebenenfalls übliche Hilfsstoffe umfaßt. Durch Verdünnung mit Wasser kann aus dem Konzentrat eine Gebrauchslösung hergestellt werden. Die Vorteile des neuen Desinfektionsmittelkonzentrats bzw. des Desinfektionsmittels bestehen in der reduzierten Geruchsentwicklung, einer verbesserten Materialverträglichkeit, einer verbesserten mikrobiziden Wirksamkeit sowie einer deutlich erhöhten Lagerstabilität. Außerdem ist die bei Desinfektionsmitteln auf Aldehydbasis bisher übliche Aktivierung überflüssig. Bevorzugte Anwendungsgebiete sind die Flächen- und Instrumentendesinfektion.

Die Erfindung betrifft ein wäßriges Desinfektionsmittelkonzentrat, das Aldehyd und Alkohol sowie gegebenenfalls übliche Hilfsstoffe umfaßt, ein daraus herstellbares Desinfektionsmittel sowie deren Verwendung.

Ärztliche Instrumente werden nach dem Gebrauch üblicherweise mit chemischen oder physikalischen Verfahren desinfiziert. Die physikalischen Verfahren wie Hitze- oder Dampfdesinfektion haben sich in der Praxis zwar bewährt, aber ihre allgemeine Anwendbarkeit ist besonders durch mangelnde Thermostabilität vieler Instrumente, z.B. Endoskope, beschränkt. Ein wesentlicher Nachteil der bekannten chemischen Verfahren besteht jedoch in ihrem eingeschränkten Wirkungsspektrum gegen Bakterien, Pilze und Viren, in der Toxizität und in der unzureichenden Materialverträglichkeit, vor allem mit den verschiedenen Kunststoffteilen thermolabiler Instrumente.

Mit Blick auf eine umfassende Wirksamkeit, die auch Viren wie z.B. Polioviren sowie Bakteriensporen umfaßt, sind Aldehyde wie Formaldehyd, Glutardialdehyd sowie Succindialdehyd (Bernsteinsäuredialdehyd) die Wirkstoffe der Wahl. Auch im Hinblick auf Materialverträglichkeitsaspekte liefern Produkte auf Aldehydbasis befriedigende Ergebnisse. Folgende Nachteile sind allerdings mit den einzelnen Wirkstoffen verbunden.

Formaldehyd hat einen stechenden Geruch und ist in jüngerer Zeit wegen seines sensibilisierenden Potentials sowie wegen des Verdachts auf ein karzinogenes Potential beim Anwender nicht vollständig akzeptiert.

Glutardialdehyd weist nahezu dieselben Eigenschaften auf, nämlich stechenden Geruch und sensibilisierendes Potential; hinzu kommt eine Verfärbung der Haut mit Glutardialdehyd-Lösungen. Weiterhin bewirkt Glutardialdehyd ebenso wie Formaldehyd eine rasche Vernetzung organischen Materials, was zu einer erschwerten Entfernbarkeit von Verunreinigungen von Instrumenten führt, wodurch der Desinfektionserfolg besonders im Inneren von Endoskopen gefährdet ist (vgl. hierzu H. Fleck, Pharmazie (1989), 44, Seiten 345-347 und S.B. Coghill et al., Lancet I (1989), Seiten 388-389).

Es wurde deshalb in den letzten Jahren ständig versucht, Glutardialdehyd vollständig oder teilweise durch Bernsteinsäuredialdehyd (auch als Succindialdehyd bezeichnet) zu ersetzen. Dies geschah vor allem deshalb, weil Bernsteinsäuredialdehyd weitaus weniger rasch Blut und Eiweiß vernetzt, so daß eine Penetration in das Innere des möglicherweise kontaminierten organischen Materials gegeben ist.

Aufgrund mangelnder Stabilität war aber bis vor kurzem kein freier Bernsteinsäuredialdehyd zugänglich; vielmehr wurde Bernsteinsäuredialdehyd in Form seines cyclischen Acetals, des Dimethoxytetrahydrofurans, angeboten, aus dem Bernsteinsäuredialdehyd durch Hydrolyse nur partiell freigesetzt werden konnte. Ein handelsübliches Desinfektionsmittel basiert auf einer Mischung dieses Acetals mit weiteren Acetalen (siehe z.B. DE-PS 24 33 836) sowie dem Bernsteinsäuredialdehyd. Dimethoxytetrahydrofuran ist allerdings eine sehr flüchtige Substanz und führt daher leicht zu Geruchsbelästigungen.

Versuche den seit kurzer Zeit erhältlichen freien Succindialdehyd (siehe EP 147 593), der erheblich leichter zu tolerieren ist als Formaldehyd, Glutardialdehyd und Dimethoxytetrahydrofuran, zu stabilen Konzentraten zu formulieren, schlugen insbesondere bei höheren Konzentrationen des Wirkstoffs im Konzentrat (die zu niedrigen Anwendungskonzentrationen des Produktes führen) fehl. Eine Instabilität war in zweierlei Hinsicht zu beobachten. Teilweise ergab sich analytisch eine Abnahme des Aldehydgehaltes und teilweise eine Phasentrennung im Konzentrat und/oder in der Gebrauchslösung.

Im Bestreben, den Gehalt an Glutaraldehyd zu reduzieren, wird z.B. in der europäischen Patentanmeldung 0 264 658 eine Kombination von Phenoxyethanol mit Glutaraldehyd, Formaldehyd oder Glyoxal vorgeschlagen, die aber offensichtlich den Zusatz eines alkalischen Aktivators zur Erzielung ausreichender Wirksamkeit und nach wie vor relativ hohe Wirkstoffkonzentrationen bei der Anwendung erfordert.

Der Erfindung lag deshalb die Aufgabe zugrunde, ein Instrumentendesinfektionsmittelkonzentrat zu entwickeln, das gegenüber den bekannten Präparaten eine reduzierte Geruchsentwicklung, eine verbesserte Materialverträglichkeit, eine verbesserte mikrobizide Wirksamkeit sowie eine deutlich erhöhte Lagerstabilität aufweist und die bisher erforderliche Aktivierung überflüssig macht.

Zur Lösung dieser Aufgabe wird ein wäßriges Desinfektionsmittelkonzentrat der eingangs genannten Art vorgeschlagen, das dadurch gekennzeichnet ist, daß es als Aldehyd Succindialdehyd, Glutardialdehyd und/oder Formaldehyd und als Alkohol ein oder mehrere begrenzt wassermischbare Alkohole enthält, die eine Wassermischbarkeit von 0,1 bis 2 Gew.-% und einen Dampfdruck bei 20°C von weniger als 2 mbar aufweisen.

Gegenstand der Erfindung ist ferner ein Desinfektionsmittel, das aus dem erfindungsgemäßen Desinfektionsmittelkonzentrat durch Verdünnung mit Wasser erhältlich ist, sowie die Verwendung des erfindungsgemäßen Desinfektionsmittelkonzentrats bzw. des erfindungsgemäßen Desinfektionsmittels.

Bevorzugte Ausführungsformen ergeben sich aus den Unteransprüchen und der nachfolgenden Beschreibung.

Es wurde überraschend gefunden, daß durch Zusatz bestimmter begrenzt wassermischbarer Alkohole zu Succindialdehyd, Glutardialdehyd und/oder Formaldehyd enthaltenden Lösungen gut lagerstabile Desinfektionsmittelkonzentrate erhalten werden, die bei verbesserter Materialverträglichkeit und reduzierter Geruchsentwicklung eine verbesserte mikrobizide Wirksamkeit zeigen.

Die begrenzte Wassermischbarkeit der ein- oder mehrwertigen Alkohole beträgt 0,1 bis 2 Gew.-% des Alkohols, bezogen auf die Wassermenge. Der Dampfdruck bei 20°C der erfindungsgemäß geeigneten Alkohole beträgt weniger als 2 mbar, vorzugsweise weniger als 1 mbar und insbesondere 0,5 mbar oder weniger. In der nachfolgenden Tabelle sind die Wassermischbarkeit bzw. Wasserlöslichkeit sowie die Dampfdrucke einiger Alkohole aufgeführt.

Tabelle

| Alkohol | Löslichkeit in Wasser (Gew.-%) | Dampfdruck bei 20°C in mbar |
|---|---|---|
| Ethanol | wassermischbar | 67 |
| 2-Propanol | " | 41,6 |
| 1-Propanol | " | 19 |
| Butylglykol | " | < 0,8 |
| Butyldiglykol | " | 0,03 |
| Triethylenglykol | " | < 0,01 |
| 1,2-Propylenglykol | " | < 0,1 |
| Polyethylenglykol, 400 | " | < 0,1 |
| Monophenylglykolether mit 4 Mol EO (Rewopal MPG 40) | " | < 0,1 |
| 2-Phenoxyethanol | ≦ 2,4 | 0,04 |
| Benzylalkohol | ≦ 4 | 0,28 |
| n-Hexyldiglykol | ≦ 1,1 | 0,1 |
| Phenoxypropanol-Isomerengemisch | ≦ 0,8 | 0,05 |
| Phenylethylalkohol | ≦ 2 | 0,08 |
| 3-Phenyl-1-propanol | ≦ 0,6 | 0,5 |

Die Wassermischbarkeit bzw. die Wasserlöslichkeit der Alkohole wird bestimmt, indem 0,2 g Alkohol in einem 20 ml Reagenzglas vorgelegt, mit VE-Wasser (vollentsalztes Wasser) versetzt und stark geschüttelt werden (Vibrofix VE 1 von IKA, maximale Drehzahl). Wenn der Alkohol nach etwa 5 Minuten nicht gelöst ist, wird entsprechend mit VE-Wasser verdünnt und erneut geschüttelt. Diese Prozedur wird wiederholt, bis der Alkohol gelöst ist.

Folgende Verdünnungen werden standardmäßig durchgeführt:

| Alkohol | Wasser | Zeit (schütteln) | → Klare Lösung |
|---|---|---|---|
| 0,2 g | + 0,2 g | 5 Minuten | → >50 % |
| 0,2 g | + 0,8 g | 5 Minuten | → <50 >20 % |
| 0,2 g | + 1,8 g | 5 Minuten | → <20 >10 % |
| 0,2 g | + 3,8 g | 5 Minuten | → <10 > 5 % |
| 0,2 g | + 9,8 g | 5 Minuten | → < 5 > 2 % |

Wenn die Wassermischbarkeit weniger als 2 % beträgt, werden 0,2 g Alkohol in einen 200 ml Erlenmeyerkolben vorgelegt, mit VE-Wasser verdünnt und etwa 20 Minuten mit einem Magnetrührer kräftig gerührt. Ist der Alkohol nicht gelöst, wird entsprechend mit VE-Wasser verdünnt und erneut gerührt.

Folgende Verdünnungen werden standardmäßig durchgeführt:

| Alkohol | Wasser | Zeit (schütteln) | → Klare Lösung nicht gelöst |
|---------|--------|------------------|----------------------------|
| 0,2 g | + 19,8 g | 5 Minuten | → >2 >1 % |
| 0,2 g | + 39,8 g | 5 Minuten | → <1 >0,5 % |
| 0,2 g | + 99,8 g | 5 Minuten | → <0,5 >0,2 % |
| 0,2 g | + 199,8 g | 5 Minuten | → <0,2 >0,1 % <0,1 % |

Die Zeit, die gerührt oder geschüttelt wird, erhöht sich auf etwa das Doppelte, wenn visuell der Eindruck entsteht, daß sich die Substanz bei der vorhandenen Konzentration eventuell doch noch auflösen könnte. Die Temperatur bleibt unberücksichtigt und entspricht in etwa Raumtemperatur.

Die Dampfdruckbestimmung für die Alkohole erfolgt in üblicher Weise (siehe z.B. Ullmanns Encyklopädie der technischen Chemie, 4. Auflage, Band 5, Seite 88).

Ein weiteres Kriterium für die erfindungsgemäß geeigneten Alkohole stellt der Geruchsschwellenwert in Wasser dar. Dieser soll >10, vorzugsweise >20 und insbesondere >50 $\mu$mol/l sein.

Als erfindungsgemäß besonders gut geeignet haben sich aliphatische Glykole der allgemeinen Formel $R_1$-$(OCH_2$-$CH_2)_n$-OH, in der $R_1$ ein geradkettiger oder verzweigter Alkylrest mit 2 bis 8 Kohlenstoffatomen, vorzugsweise 6 Kohlenstoffatomen ist und n 1 bis 4 und vorzugsweise 2 beträgt, und aromatische Alkohole erwiesen. Bei letzteren handelt es sich um Phenoxyalkanole mit mehr als 2 Kohlenstoffatomen in der Alkylkette und Phenylalkanole, wobei der Phenylring jeweils substituiert sein kann. Als Substituenten kommen hierbei insbesondere $C_1$-$C_{18}$-Alkylgruppen in Frage. Beispiele für derartige aromatische Alkohole sind 1-Phenoxy-2-propanol, 2-Phenoxy-1-propanol, 3-Phenoxy-1-propanol, 1-Phenoxy-2-butanol, 2-Phenoxy-1-butanol, 1-Phenylethylalkohol, 2-Phenylethylalkohol, 3-Phenyl-1-propanol, alpha-4-Dimethylbenzylalkohol und Mischungen aus zwei oder mehr dieser Verbindungen. Beispiele für aliphatische Glykole sind n-Hexyldiglykol und 2-Ethylhexyldiglykol. Als besonders vorteilhaft hat sich die Verwendung von 3-Phenyl-1-propanol und Hexyldiglykol erwiesen (siehe Beispiele).

Die erfindungsgemäß bevorzugt verwendeten nichtionischen Tenside besitzen die allgemeinen Formel $R_2$-$(OCH_2$-$CH_2)_n$-$OR_3$, wobei $R_2$ ein geradkettiger oder verzweigter Alkylrest mit 8 bis 18 C-Atomen ist, $R_3$ Wasserstoff oder ein geradkettiger oder verzweigter Alkylrest mit 1 bis 6 Kohlenstoffatomen ist und n 5 bis 50 beträgt. Bevorzugt wird ein Tensid eingesetzt, bei dem $R_2$ 10 Kohlenstoffatome aufweist, $R_3$ Wasserstoff ist und n 8 bis 12 beträgt.

Das Desinfektionsmittelkonzentrat bzw. Desinfektionsmittel kann neben den oben genannten erfindungswesentlichen Bestandteilen außerdem übliche Hilfsstoffe wie z.B. Korrosionsschutzmittel, Komplexbildner, Parfum und/oder Farbstoffe enthalten. Es ist jedoch frei von kationenaktiven Verbindungen und stickstoffhaltigen Stabilisatoren wie z.B. Imidazol oder Imidazolderivaten.

Der pH-Wert der erfindungsgemäßen Desinfektionsmittelkonzentrate beträgt vorzugsweise 3 bis 6 und insbesondere 4 bis 5,5.

Das Desinfektionsmittelkonzentrat enthält im allgemeinen 2 bis 25 Gew.-% Aldehyd, 2 bis 30 Gew.-% begrenzt wassermischbaren Alkohol und bis zu 25 Gew.-% nichtionisches Tensid.

Die gebrauchsfertige Desinfektionsmittellösung enthält im allgemeinen je nach Anforderung 1 bis 10 Gew.-% des Konzentrats und ist durch Verdünnen des Konzentrats mit der entsprechenden Menge Wasser erhältlich. Der pH-Wert der Desinfektionsmittellösung liegt zwischen 3 und 7, bevorzugt zwischen 4 und 6. Eine Aktivierung durch alkalische Zusätze ist nicht erforderlich.

Das erfindungsgemäße Desinfektionsmittel eignet sich zur Flächen- oder Instrumentendesinfektion, bevorzugt zur Instrumentendesinfektion bei thermolabilen Materialien. Es ist eine klare Lösung, das die eingangs erwähnten Anforderungen hinsichtlich Geruchsentwicklung, Materialverträglichkeit, mikrobizider Wirksamkeit und Stabilität in der angestrebten Weise erfüllt (siehe die nachfolgenden Beispiele).

Die Erfindung wird im folgenden anhand von Beispielen näher erläutert.

**Beispiel 1**

Es wurde die Wirkungssteigerung von Aldehydlösungen durch Zusatz begrenzt wassermischbarer Alkohole untersucht. Bestimmt wurde die Wirksamkeit gegenüber Mycobacterium terrae (ATCC 15755) nach der Keimträgermethode gemäß Richtlinie für die Prüfung und Bewertung chemischer Desinfektionsverfahren (Stand 1.1.81), veröffentlicht in Zbl. Bakt. Hyg., I. Abt. Orig. B 172, 534-562 (1981). Es wurden jeweils 100 g Konzentrat hergestellt, die 9,00 g Glutardialdehyd, 5,00 g Succindialdehyd, 25,00 g Isodecanpolyethylenglykol(11)-ether (nichtionisches Tensid), 10 g des zu prüfenden Alkohols und im übrigen gereinigtes Wasser enthielten.

Notiert sind die für Keimfreiheit der Keimträger bei den jeweiligen Einsatzkonzentrationen erforderlichen Einwirkzeiten.

| Desinfektionsmittelkonzentration* | 1 % | 2 % | 3 % |
|---|---|---|---|
| Ohne Zusatz | > 60' | > 60' | 60' |
| 3-Phenylpropanol-1 | 60' | 15' | 15' |
| Phenethylalkohol | > 60' | 30' | 15' |
| Hexyldiglykol | > 60' | 45' | 30' |

\* Die verwendeten Gebrauchslösungen bestanden aus der angegebenen Menge des Desinfektionsmittelkonzentrats und im übrigen aus gereinigtem Wasser (z.B. 3 g Konzentrat + 97 g Wasser ≙ 3 %).

Außerdem wurden Vergleichsansätze mit den zu prüfenden Alkoholen allein nach derselben Methode untersucht. Dazu wurden wiederum jeweils 100 g Konzentrat hergestellt, die 20 g des zu prüfenden Alkohols, 20 g Tridecanpolyethylenglykol(12)-ether, 6 g Isodecanpolyethylenglykol(11)-ether und im übrigen gereinigtes Wasser enthielten. Es wurden die in der folgenden Tabelle wiedergegebenen Ergebnisse erhalten.

| Alkohol* | 0,5 % | 1,0 % | 2,0 % | 3,0 % | 5,0 % |
|---|---|---|---|---|---|
| Phenoxypropanole | - | - | - | - | - |
| Phenylethanol | - | - | - | - | - |
| 3-Phenylpropanol | - | - | - | 120' | 30' |
| Hexyldiglykol | - | - | - | - | - |

- = Innerhalb 120 min keine ausreichende Keimreduktion (">120'")
\* = Die angegebenen Konzentration wurde durch Verdünnung der Konzentrate mit gereinigtem Wasser eingestellt.

Dieses Beispiel zeigt die überraschende Wirkungssteigerung von aldehydischen Desinfektionsmitteln durch Zusatz begrenzt wassermischbarer Alkohole, wobei die Gegenüberstellung mit den aldehydfreien Lösungen deutlich macht, daß es sich bei den beobachteten Wirksamkeiten der Abmischungen um einen überraschenden Synergismus handelt, da die Alkohole allein innerhalb sinnvoller Zeitintervalle und mit vertretbaren Konzentrationen keine Eigenwirkung zeigen.

**Beispiel 2**

Beispiel 1 wurde wiederholt, wobei als begrenzt wassermischbarer Alkohol Hexyldiglykol in unterschiedlichen Mengen verwendet wurde. Die in der nachfolgenden Tabelle wiedergegebenen Ergebnisse zeigen die direkte Abhängigkeit der Wirkungssteigerung von der Menge des zugesetzten Alkohols.

| Desinfektionsmittelkonzentration | 2 % | 3 % |
|---|---|---|
| Ohne Zusatz | > 60' | 60' |
| + 3 % Hexyldiglykol | > 60' | 45' |
| + 10 % Hexyldiglykol | 45' | 30' |

**Beispiel 3**

Beispiel 1 wurde wiederholt, wobei Konzentrate hergestellt wurden, die 18 g Glutardialdehyd, 20 g Isodecanpolyethylenglykol(11)-ether (nichtionisches Tensid), 20 oder 30 g begrenzt wassermischbaren Alkohol (siehe Tabelle) und im übrigen gereinigtes Wasser enthielten. Die bei den jeweiligen Konzentrationen der Gebrauchslösungen für die Keimfreiheit der Keimträger benötigten Einwirkzeiten ergeben sich aus der nachfolgenden Tabelle.

| Desinfektionsmittelkonzentration | 0,5 % | 1 % | 1,5 % | 2 % | 3 % |
|---|---|---|---|---|---|
| 30 g Triethylenglykol | - | - | - | - | 45' |
| 30 g 1,2-Propylenglykol | - | - | - | - | 45' |
| 30 g Hexyldiglykol | - | 30' | n.d. | 15' | 15' |
| 20 g Hexyldiglykol | - | - | 30' | 30' | n.d. |
| 20 g Phenoxypropanol | - | - | 45' | 30' | n.d. |
| 20 g 1-Phenylethylalkohol | - | - | 45' | 45' | n.d. |
| 20 g 3-Phenylpropanol-1 | - | 15' | 15' | 15' | n.d. |

- = keine Wirksamkeit innerhalb 60'; n.d. = nicht durchgeführt

Die Versuche zeigen, daß eine besonders überraschende Wirkungssteigerung durch die begrenzt wassermischbaren Alkohole erzielt wird. Vergleichbare Wirkungssteigerungen wurden auch erzielt, wenn Succindialdehyd oder Formaldehyd anstelle von oder gemischt mit Glutardialdehyd verwendet wurden.

**Beispiel 4**

Konzentrate aus Aldehyd und Alkoholen zeigen nach längerer Lagerungszeit Inhomogenitäten beim Ansetzen von Gebrauchslösungen mit Wasser. Um diesen Effekt zu untersuchen, wurden jeweils 100 g Konzentrat hergestellt, das 5 g Succindialdehyd, 9 g Glutardialdehyd, 20 g Isodecanpolyethylenglykol(11)-ether, 10 g des zu prüfenden Alkohols und 56 g gereinigtes Wasser enthielt. Diese Formulierungen wurden 1 Monat bei +40°C gelagert und dann untersucht, bis zu welcher Konzentration in Wasser klare Lösungen erzielt wurden.

| Formulierungen mit Alkoholkomponente | Mischungslücke mit niedriger konzentrierten Lösungen als: |
|---|---|
| Phenoxypropanol | 7 %-ig |
| Phenoxyethanol | 10 %-ig |
| Phenethylalkohol | 14 %-ig |
| Hexyldiglykol | keine Mischungslücke |

Es zeigt sich, daß die Grenze der Wassermischbarkeit des Desinfektionsmittelkonzentrats unter der niedrigst möglichen Einsatzkonzentration liegen muß. Je niedriger die Konzentration ist, bei der Entmischung beobachtet wird, um so größer ist die Anwendungssicherheit. Außerdem zeigen diese Versuche den überraschenden stabilisierenden Effekt des Hexyldiglykols im Vergleich zu anderen Alkoholen mit vergleichbarer Wasserlöslichkeit.

**Beispiel 5**

Die stabilitätserhöhende Wirkung eines Zusatzes eines begrenzt wasserlöslichen Alkohols zeigt sich an einem direkten Vergleich zwischen einem im Markt befindlichen Desinfektionsmittel auf der Basis von Dialdehyden mit 20 % Ethanol und 15 % 1-Propanol und einer erfindungsgemäßen Formulierung, die in 100 g 5 g Succindialdehyd, 9 g Glutardialdehyd, 10 g Hexyldiglykol, 25 g Isodecanpolyethylenglykol(11)-etherund im übrigen Wasser sowie eine geringe Menge Korrosionsschutzmittel enthält. Nach Lagerung der beiden Formulierungen bei +40°C über einen Zeitraum von 6 Monaten wurde der Verlust an Gesamtaldehydgehalt bestimmt. Bei der im Markt befindlichen Formulierung betrug der Gesamtaldehydabfall 13,3 %, während sich der Gesamtaldehydgehalt bei der erfindungsgemäßen Formulierung nur um 4,8 % erniedrigte. Dieser Vergleich zeigt insbesondere den stabilisierenden Effekt des begrenzt wassermischbaren Alkohols Hexyldiglykol gegenüber den unbegrenzt wassermischbaren Alkoholen Ethanol und 1-Propanol.

**Beispiel 6**

Die besondere Eignung des Hexyldiglykols innerhalb der Gruppe der begrenzt mischbaren Alkohole wird in den folgenden Testreihen deutlich.

| Mischung | Befund |
|---|---|
| Glutardialdehyd + Phenoxyethanol | Mischungslücke bzw. Entmischung |
| Glutardialdehyd + Phenoxypropanole | Mischungslücke bzw. Entmischung |
| Glutardialdehyd + Benzylalkohol | Mischungslücke bzw. Entmischung |
| Glutardialdehyd + n-Hexyldiglykol | keine Mischungslücke |

Während die ersten drei Mischungen bereits im Konzentrat nach wenigen Minuten bzw. Stunden starke Trübungen (besonders bei Mischungen im Verhältnis 1:1) zeigten, lag die letzte Mischung auch nach einem Zeitraum von über 4 Monaten als klare, stabile Lösung vor.

Bei entsprechenden Versuchen mit Succindialdehyd und Formaldehyd wurden ähnliche Ergebnisse erhalten.

**Beispiel 7**

Konzentratformulierungen mit 5 % Succindialdehyd und 9 % Glutardialdehyd sowie 10 % Hexyldiglykol wurden mit unterschiedlichen Mengen verschiedener nichtionischer Tenside 1 Monat bei 40 °C gelagert und anschließend geprüft, ob die daraus durch Verdünnung mit Wasser hergestellte 1,5 %-ige Gebrauchslösung klar, opal oder trüb ist.

Konzentratformulierung mit

25   22,5   20   18   15   12   10   8   5   3 %   Isodecanpolyethylenglykol(11)-ether

———————————————————————————————

←       klar       → ← opal → ←   trüb   →

25   22,5   20   18   15   12   10   8   5   3 %   Tridecanpolyethylenglykol(12)-ether

———————————————————————————————

←               klar               → ←   opal   →

25   22,5   20   18   15   12   10   8   .5   3 %   Tridecanpolyethylenglykol(40)-ether

———————————————————————————————

←       klar   → ←           trüb           →

Die obigen Ergebnisse zeigen, daß die Stabilität der Gebrauchslösungen, die nach Lagerung des Konzentrats angesetzt wurden, erheblich von der Art und Menge des nichtionischen Tensids abhängt. So reichten 8 % Tridecanpolyethylenglykol(12)-ether im Konzentrat, um nach 1-monatiger Lagerung des Konzentrats bei 40 °C klare Gebrauchslösungen zu erzeugen. Bei Isodecanpolyethylenglykol(11)-ether waren 15 % und bei Tridecanpolyethylenglykol(40)-ether 18 % erforderlich.

EP 0 668 014 A1

**Beispiel 8**

Die Materialverträglichkeit der erfindungsgemäßen Desinfektionsmittel gegenüber bekannten Instrumentendesinfektionsmitteln wurde untersucht, indem standardisierte Prüfkörper aus Kunststoff und Kautschuk in 10 %-ige wäßrige Lösungen vollständig eingetaucht und anschließend die Quellung (% Gewichtsunterschied) gemessen sowie das Aussehen beschrieben wurde. Es wurden die im Beispiel 5 beschriebenen Formulierungen eingesetzt. Die Ergebnisse sind in der folgenden Tabelle wiedergegeben.

| Material | Handelsprodukt | | Erfindung | |
|---|---|---|---|---|
| | Quellung | Aussehen | Quellung | Aussehen |
| PE | 0,39 % | Spur gelblich | 0,08 % | unverändert |
| PS, klar | 0,34 % | Spur gelblich | 0,02 % | unverändert |
| ABS | 0,59 % | Spur gelblich | 0,29 % | unverändert |
| PMMA | 1,18 % | Spur rötlich | 0,77 % | unverändert |
| PA | 6,59 % | gelb | 4,7 % | gelbbraun |
| PC | 0,17 % | hellrosa | 0,01 % | unverändert |
| PVC, hart | 0,24 % | unverändert | 0,19 % | unverändert |
| PVC, weich | 2,26 % | hellgelb-braun | -0,47 % | etwas gelber |
| EPDM | 1,07 % | unverändert | 0,24 % | unverändert |
| Silikon | 2,90 % | hellrosa | 1,56 % | unverändert |
| CR | 4,68 % | unverändert | 5,01 % | unverändert |
| NR P 14 | 4,48 % | etwas dunkler | 2,94 % | unverändert |
| NR P 11 | 2,47 % | unverändert | 1,45 % | unverändert |
| NBR | 3,00 % | unverändert | 2,87 % | unverändert |

Die Versuche zeigen überraschenderweise durchweg eine geringere Quellung sowie eine geringere Änderung des Aussehens der Prüfkörper nach Kontakt mit der erfindungsgemäßen Formulierung im Vergleich mit dem als gut materialverträglich bekannten Handelsprodukt.

**Patentansprüche**

1. Wäßriges Desinfektionsmittelkonzentrat, das Aldehyd und Alkohol sowie gegebenenfalls übliche Hilfsstoffe umfaßt, **dadurch gekennzeichnet**, daß es als Aldehyd Succindialdehyd, Glutardialdehyd und/oder Formaldehyd und als Alkohol ein oder mehrere begrenzt wassermischbare Alkohole enthält, die eine Wassermischbarkeit von 0,1 bis 2 Gew.-% und einen Dampfdruck bei 20 °C von weniger als 2 mbar aufweisen.

2. Desinfektionsmittelkonzentrat nach Anspruch 1, bei dem der oder die begrenzt wassermischbaren Alkohole ausgewählt sind aus der Gruppe bestehend aus aromatischen Alkoholen und aliphatischen Glykolen der allgemeinen Formel $R_1$-$(OCH_2$-$CH_2)_n$-OH, in der $R_1$ ein geradkettiger oder verzweigter Alkylrest mit 2 bis 8 Kohlenstoffatomen, vorzugsweise 6 Kohlenstoffatomen ist und n 1 bis 4 und vorzugsweise 2 beträgt.

3. Desinfektionsmittelkonzentrat nach Anspruch 2, bei dem der aromatische Alkohol ein Phenoxyalkanol mit mehr als 2 Kohlenstoffatomen in der Alkylkette oder ein Phenylalkanol ist, wobei der Phenylring jeweils substituiert sein kann.

4. Desinfektionsmittelkonzentrat nach Anspruch 2 oder 3, bei dem der Alkohol n-Hexyldiglykol, 2-Ethylhexyldiglykol, Phenoxypropanol, Phenylethylalkohol und/oder 3-Phenyl-1-propanol ist.

5. Desinfektionsmittelkonzentrat nach einem der vorhergehenden Ansprüche, das 2 bis 25 Gew.-% Aldehyd und 2 bis 30 Gew.-% begrenzt wassermischbaren Alkohol enthält.

6. Desinfektionsmittelkonzentrat nach einem der vorhergehenden Ansprüche, das bis zu 25 % nichtionisches Tensid der allgemeinen Formel $R_2$-$(OCH_2CH_2)_n$-$OR_3$ enthält, wobei $R_2$ ein geradkettiger oder verzweigter Alkylrest mit 8 bis 18 Kohlenstoffatomen ist, $R_3$ Wasserstoff oder ein geradkettiger oder

8

verzweigter Alkylrest mit 1 bis 6 Kohlenstoffatomen ist und n 5 bis 50 beträgt.

7. Desinfektionsmittelkonzentrat nach einem der vorhergehenden Ansprüche, das einen pH-Wert von 3 bis 6 und vorzugsweise 4 bis 5,5 aufweist.

8. Desinfektionsmittel, **dadurch gekennzeichnet**, daß es eine wäßrige Verdünnung des Desinfektionsmittelkonzentrats gemäß einem der Ansprüche 1 bis 7 ist.

9. Desinfektionsmittel nach Anspruch 8, das 1 bis 10 Gew.-% des Desinfektionsmittelkonzentrats gemäß einem der Ansprüche 1 bis 7 enthält.

10. Desinfektionsmittel nach Anspruch 8 oder 9, das einen pH-Wert von 3 bis 7 und vorzugsweise 4 bis 6 aufweist.

11. Verwendung des Desinfektionsmittelkonzentrats gemäß einem der Ansprüche 1 bis 7 oder Desinfektionsmittels gemäß einem der Ansprüche 8 bis 10 zur Flächen- oder Instrumentendesinfektion.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE-C-42 17 690 (SCHÜLKE & MAYR) <br> * Ansprüche * <br> --- | 1-11 | A01N35/02 <br> //(A01N35/02, <br> 39:00,31:04, <br> 31:02,25:30) |
| X | DE-A-39 43 562 (SCHÜLKE & MYR) <br> * Ansprüche * <br> * Seite 3, Zeile 14 - Zeile 18 * <br> * Seite 3, Zeile 35 * <br> --- | 1-11 | |
| X | FR-A-2 307 548 (STERLING DRUG) <br><br> * Ansprüche * <br> --- | 1,5,8,9, 11 | |
| A | EP-A-0 251 743 (R.K. WHITELEY) <br> * Ansprüche 1,8 * <br> * Seite 2, Zeile 46 - Zeile 58 * <br> --- | 2,6 | |
| A | US-A-3 968 248 (R.M.G. BOUCHER) <br> * Ansprüche * <br> --- | 6 | |
| A | CHEMICAL PATENTS INDEX, DOCUMENTATION ABSTRACTS JOURNAL <br> Week 9313, <br> Derwent Publications Ltd., London, GB; <br> AN 93-104148 <br> & JP-A-05 043 405 (TOTO) 23. Februar 1993 <br> * Zusammenfassung * <br> ----- | 2,4 | **RECHERCHIERTE SACHGEBIETE (Int.Cl.6)** <br><br> A01N |

Der vorliegende Recherchenbericht wurde für alle Patentansprüche erstellt

| Recherchenort | Abschlußdatum der Recherche | Prüfer |
|---|---|---|
| DEN HAAG | 8. August 1994 | Decorte, D |

EPO FORM 1503 03.82 (P04C03)